# EUROPEAN PATENT SPECIFICATION

(11) **EP 0 351 131 B1**
(45) Date of publication and mention of the grant of the patent: **06.10.1993**
(21) Application number: 89306851.0
(22) Date of filing: 06.07.1989
(51) Int. Cl.: B60T 7/08

(54) **Automobile cable brake mechanism**
Kraftfahrzeugseilbremsvorrichtung
Dispositif de frein à câble pour véhicule automobile

(30) Priority: 15.07.1988 GB 8816941
(43) Date of publication of application: 17.01.1990
(73) Proprietor: REARSBY AUTOMOTIVE LIMITED, Leicester LE7 8YH (GB)
(72) Inventor: Byron , Donald John, Grantham Lincolnshire (GB); Evans, Robert Michael, Loughborough Leicestershire LE12 7EU (GB)
(74) Representative: SERJEANTS

(56) References cited:
- EP-A- 0 162 749
- FR-A- 1 359 915
- FR-A- 2 582 272
- US-A- 3 216 276
- US-A- 4 515 036

## Description

The invention relates to a cable brake mechanism for an automobile, and more particularly to an arrangement for automatically adjusting the tension in a brake cable.

Automobile cable brakes, or parking brakes, are usually installed whilst the automobile is under construction on a production line. An actuating mechanism is fitted at a convenient location in the automobile and a cable is connected between the actuator and the brake drums or discs. Once the cable has been connected, any slack must be taken up until the tension in the cable is such that there is no excessive play and the brakes are positively applied when the actuator is operated.

Such a series of operations involves considerable time consuming effort on the part of the production line constructor who must access the underside of the vehicle to connect up the mechanism and ensure that the cable tension is correctly adjusted. In addition, the cable may slacken throughout the lifetime of the vehicle and periodically the cable tension has to be further adjusted.

There have been proposed automobile cable brake actuators which incorporate mechanisms for automatically taking-up any slack in the brake cable and maintaining the desired cable tension. EP-A-0162749 (Peugeot Citroen) addresses only the problem of taking-up slack in the brake cable, and solves that problem by using a pawl and ratchet mechanism which gives adjustment in one direction only. It does not address the problem of the conflict inherent in adjustments to take-up slack and to relieve excess tension, and teaches a mechanism which would progressively increase the tension in a brake cable well beyond the required tension, as a consequence of temporary cable slackening (due for example to axle compliance) followed by tightening.

The invention provides an automobile cable brake mechanism comprising a brake actuating lever pivotally mounted on a fixed mounting, a locking pawl on the lever engaging a ratchet mechanism on the fixed mounting for releasably locking the lever in an actuating position, a cable tensioning plate pivotally mounted on the fixed mounting and having an anchorage means thereon for an end of the brake cable, a torsion spring acting between the fixed mounting and the cable tensioning plate to maintain a constant cable tension when the lever is in its non-actuating rest position, an actuating pawl carried by the lever and engageable with a ratchet gear formed on the cable tensioning plate to rotate the tensioning plate on lever movement and provide a cable tension sufficient for braking, and means for disengaging the actuating pawl from the ratchet on the cable tensioning plate when the lever is in its non-actuating rest position. The disengagement of the actuating pawl from the ratchet on the cable tensioning plate when the lever is in the non-actuating position allows the cable to slacken if required.

The means for disengaging the actuating pawl from the ratchet gear on the tensioning plate is preferably a cam protruding from the fixed plate which abuts the actuating pawl when the lever is in the non-actuating rest position.

The invention also preferably further includes frangible means such as a shear pin for temporarily locking the cable tensioning plate against pivotal movement until the lever is first operated. This facilitates installation of the mechanism by preventing the torsion spring from tensioning the cable during initial installation, and enables the cable immediately to assume the required cable tension after the first operation of the lever causes fracture of the frangible means.

The actuating lever and the cable tensioning plate may have a common pivot, as may the locking pawl and the actuating pawl.

Preferably the locking pawl is urged into engagement with teeth of the associated ratchet mechanism and the actuating pawl is urged into engagement with teeth on the ratchet gear by resilient means, which means may be common to and act between both pawls.

Preferably the locking pawl is urged into engagement with teeth of the associated ratchet mechanism and the actuating pawl is urged into engagement with teeth on the ratchet gear by resilient means, which means may be common to and act between both pawls.

The torsion spring may be earthed either to the cable tensioning pivot or to the fixed mounting.

The torsion spring is preferably either a clock spring or a constant torque curved leaf spring.
Figure 1 is a partly cut-away side view illustrating a mechanism according to the invention in the brakes released position with minimum cable adjustment;
Figure 2 is a partly cut-away side view illustrating a mechanism according to the invention in the brakes applied position with minimum cable adjustment;
Figure 3 is a partly cut-away side view illustrating a mechanism according to the invention in the brakes released position with maximum cable adjustment;
Figure 4 is a partly cut-away side view illustrating a mechanism according to the invention in the brakes applied position with maximum cable adjustment;
Figure 5 is a cross section of a mechanism according to the invention through the line AA of Figure 1;
Figure 6 is a partly cut-away side view, similar to that of Figure 1, illustrating an alternative mechanism according to the invention; and
Figure 7 is a cross section, similar to that of Figure 5 but of a central detail only, through the embodiment of Figure 6.

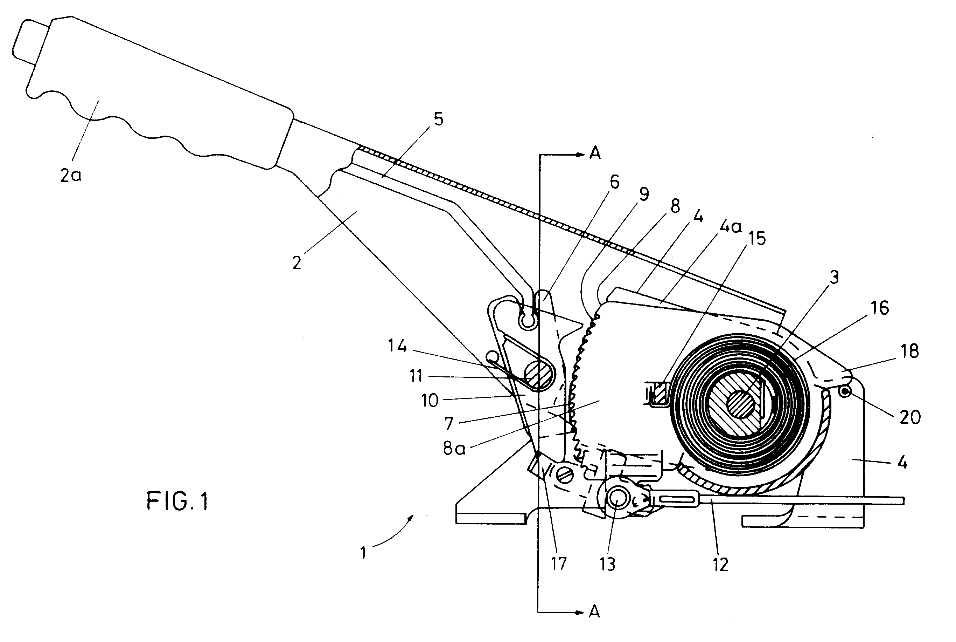

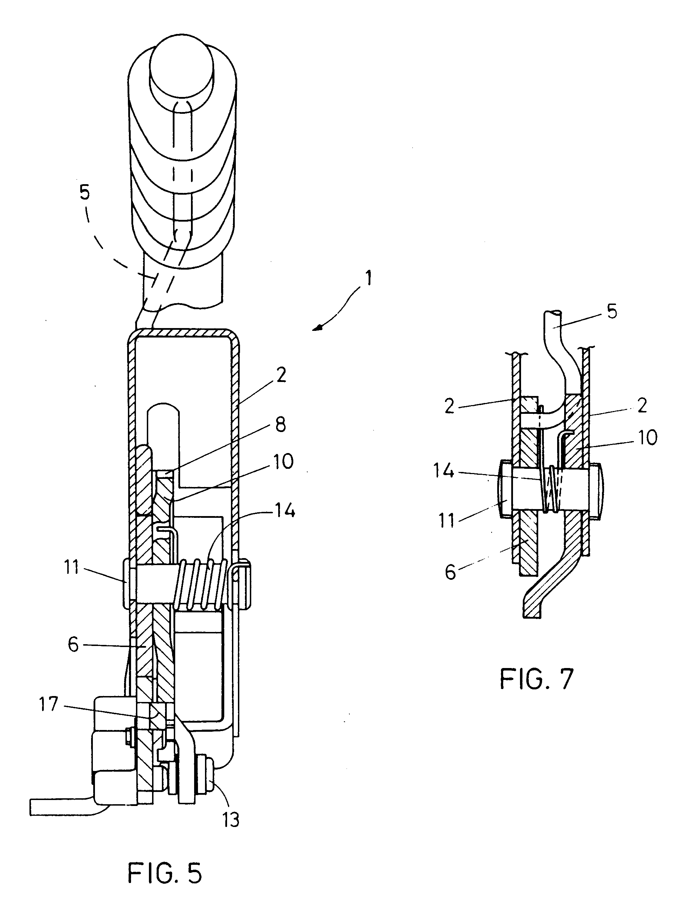

With reference to Figures 1 and 5, an automobile handbrake mechanism indicated generally at 1 has a lever 2 pivotably mounted to a fixed plate 4 by a main pivot pin 3. The fixed plate 4, affixed to the body of an automobile (not shown), has a quadrant portion 4a with a toothed circumferential edge 7. A locking pawl 6 pivotably mounted to the lever 2 by pawl pivot pin 11 is urged into engagement with the teeth on the fixed edge 7 of the quadrant portion 4a by a spring-loaded actuator rod 5. The spring-loading of the actuator rod 5 is generally to the right as viewed in Figure 1 and is provided by a coil spring (not shown) housed in a handle portion 2a of the actuating lever 2.

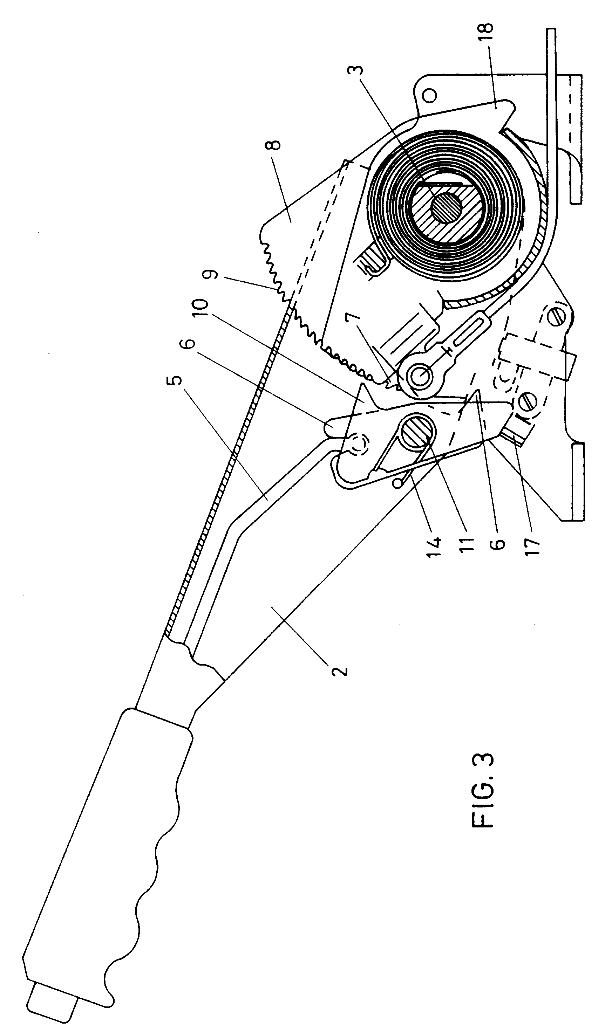

A cable-tensioning plate 8 is pivotably mounted to the fixed plate 4 by the main pivot pin 3 and has a quadrant portion 8a with a toothed circumferential edge 9. A brake cable 12 is attached to the cable-tensioning plate 8 at a cable anchorage point 13. A torsion spring 16 is earthed to the main pivot pin 3 and attached to impart a torque upon the lift plate 8 at a connection flange 15. An actuating pawl 10 pivotably mounted to the lever 2 by the pawl pivot pin 11 is urged by a spring 14 into engagement with the teeth on the circumferential edge 9. A cam 17 protruding from the fixed plate 4 abuts the actuating pawl and disengages the actuating pawl 10 from its toothed edge 9 when the lever 2 is moved to its brake-releasing rest position as shown in Figure 1 and 3. A shear pin 20 protrudes from the fixed plate 4 and abuts a locking nose 18 of the cable-tensioning plate 8, restraining the spring 16 from imparting a torque upon the cable-tensioning plate 8 whilst the mechanism is being installed.

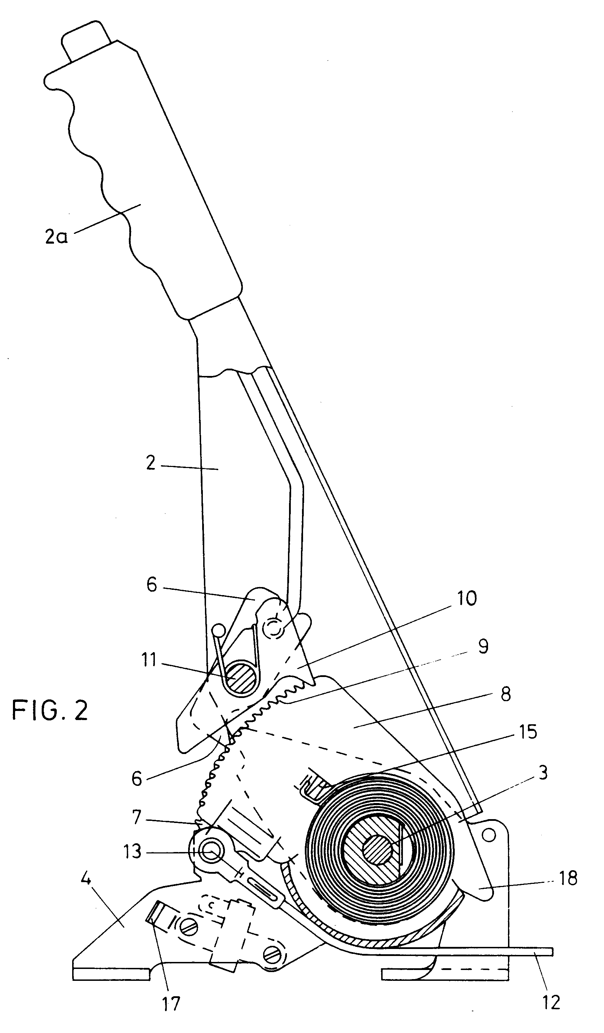

The operation of the mechanism will be explained with reference to Figures 2, 3 and 4.

Once the mechanism has been installed and connected into an automobile, the lever 2 is operated by rotating it clockwise as viewed in Figure 1. On initial pivotal movement of the lever 2 about the fixed plate 4, the actuating pawl 10 is taken out of abutment with the cam 17 and is urged by the spring 14 into engagement with the nearest tooth on the quadrant portion 8a to pick up and rotate the cable-adjusting plate 8 about the main pivot pin 3. The rotation of the plate 8 increases the tension in the brake cable 12 and consequently applies the brakes of the automobile. The locking pawl 6 engages with the teeth on the quadrant portion 4a to prevent return movement of the lever 2 and to maintain the braking tension, in the brakes applied position as illustrated in Figure 2.

The first such rotation of the cable-tensioning plate 8 after initial installation of the mechanism causes the shear pin 20 to be sheared by the locking nose 18. Until then, the pretension in the torsion spring 16 has been received by the shear pin 20 and has not been applied through the cable-tensioning plate 8 to the brake cable 12.

In order to release the brakes, the spring-loaded rod 5 is depressed to disengage the locking pawl 6 from the teeth on the quadrant portion 4a, and the lever 2 is rotated anticlockwise to decrease the brake cable tension. The plate 8 rotates anticlockwise in conjunction with the lever 2 until such time as the cable 12 assumes the required rest tension dictated by the clockwise torque imparted on the plate 8 by the spring 16. The torque imparted by the spring 16 opposes the tension created by brake pull off springs of the vehicle brakes (not shown) which assist brake release. The torque imparted by the spring 16 is such that all excess cable slack is taken up without interfering with the complete release of the brakes. Once the required rest tension has been assumed by the cable 12, the clockwise torque imparted by the spring 16 prevents the plate 8 from rotating further anticlockwise and the pawl 10 passes over the teeth on the quadrant portion 8a until the lever is returned to the brake released position, as illustrated in Figure 3, whereupon the pawl 10 abuts the cam 17 and disengages from the teeth on the quadrant portion 8a.

The disengagement of the actuating pawl 10 from the teeth on the quadrant 8a enables the cable-tensioning plate 8 to rotate in either direction and allows not only for the take-up of further slack in the cable 12 but also for the relief of excess tension in the cable 12, due to, for example, the cooling and contraction of the brakes. By relieving the excess tension, the brakes are prevented from accidental application caused by an ambalance between the resting and pull-off tensions.

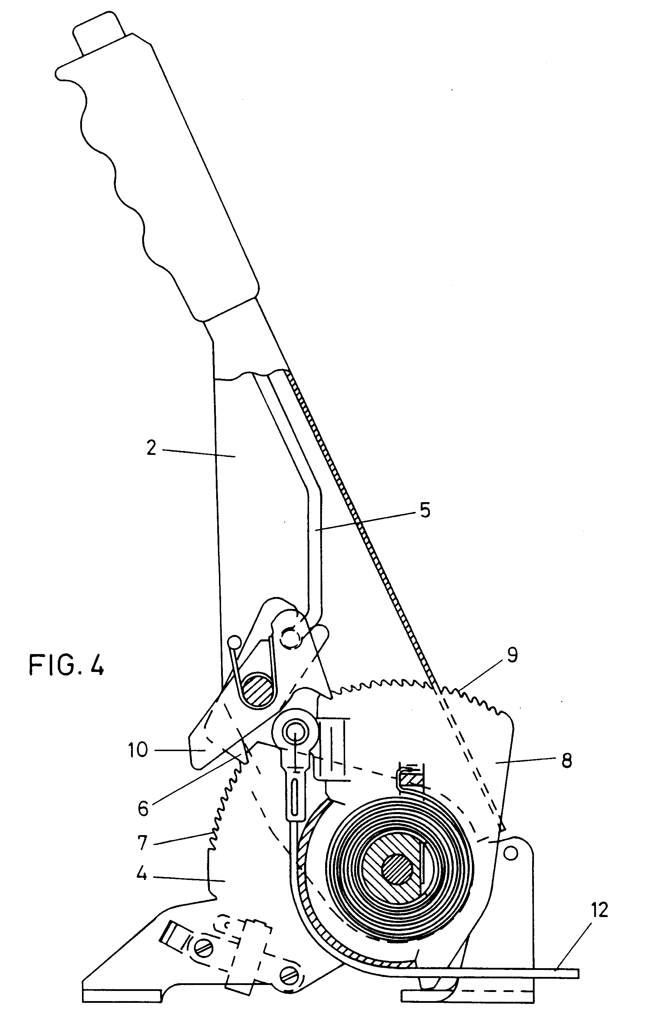

Subsequent application of the brakes occurs in a manner identical to that described with reference to Figure 2 except that the actuating pawl 10 need not engage the same tooth on the guadrant portion 8a. Indeed as slack in the brake cable 12 is taken up by clockwise rotation of the cable-tensioning plate 8, the actuating pawl 10 engages teeth on the quadrant portion 8a progressively nearer the cable anchorage point 13. The extreme case of the pawl 10 engaging the final tooth on the quadrant portion 8a to apply the brakes, as a result of maximum adjustment, is illustrated in Figure 4.

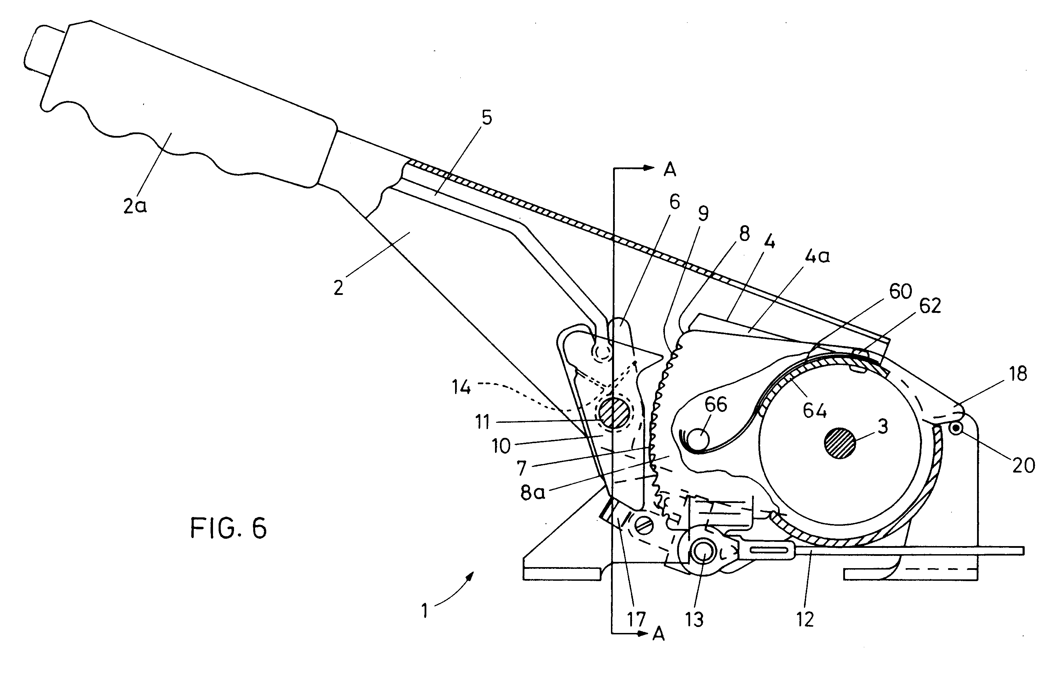

Figure 6 illustrates an alternative construction in which part of the cable-actuating plate 8 is cut away to show that the clock spring 16 of Figures 1 to 5 is replaced by a constant torque curved leaf spring 60. Such a spring is sold under the Trade Mark TENSATOR, and a suitable spring may have nine laminations or leaves. One end of the spring is screwed or rivetted at 62 to an arcuate flange 64 of the fixed plate 4, and the spring curls under a stub pin 66 fast to the cable-tensioning plate 8 to bias the plate 8 clockwise. The spring 60 lies between the two plates 4 and 8. The resulting separation of the plates 4 and 8 is accompanied by a corresponding separation of the associated pawls 6 and 10, and a further modification of the mechanism shown in Figures 1 to 5 would be to have the spring 14 acting on the actuating pawl 10 earthed not to the lever 2 as in Figures 1 to 5 but to the pawl 6 as in Figures 6 and 7. The reaction force of the spring 14 on the pawl 6 therefore urges the pawl into engagement with the toothed edge 7 of the fixed plate 4, and there is no need for any further spring-loading of the actuator rod 5.

It is a characteristic of the spring 60 that the clockwise bias that it exerts on the plate 8 is substantially constant throughout the whole adjustment range of the plate 8. In all other respects the embodiment of Figure 6 is the same as that of Figure 1 to 5.

## Claims

1. An automobile cable brake mechanism (1) comprising a brake actuating lever (2) pivotally mounted on a fixed mounting (4), a locking pawl (6) on the lever (2) engaging a ratchet (7) on the fixed mounting (4) for releasably locking the lever (2) in an actuating position, a cable tensioning plate (8) pivotally mounted on the fixed mounting (4) and having an anchorage means (13) thereon for an end of the brake cable (12), a torsion spring (16) acting between the fixed mounting (4) and the cable tensioning plate (8) to maintain a constant cable tension when the lever (2) is in its non-actuating rest position, an actuating pawl (10) carried by the lever (2) and engageable with a ratchet gear (9) formed on the cable tensioning plate (8) to rotate the tensioning plate (8) on lever movement and provide a cable tension sufficient for braking, CHARACTERISED BY means for disengaging the actuating pawl (10) from the ratchet gear (9) on the cable tensioning plate (8) when the lever (2) is in its non-actuating rest position.

2. A brake mechanism (1) according to claim 1, wherein the means for disengaging the actuating pawl (10) from the ratchet gear (9) on the tensioning plate (8) comprises a cam (17) protruding from the fixed plate (4) which abuts the actuating pawl (10) when the lever (2) is in the non-actuating rest position.

3. A brake mechanism (1) according to claim 1 or claim 2 further including frangible means (20) for temporarily locking the cable tensioning plate (8) against pivotal movement for the period from initial installation until first actuating movement of the lever (2).

4. A brake mechanism (1) according to any preceding claim, wherein the actuating lever (2) and the cable tensioning plate (8) have a common pivot (3).

5. A brake mechanism (1) according to any preceding claim, wherein the locking pawl (6) and the actuating pawl (10) have a common pivot (11).

6. A brake mechanism (1) according to any preceding claim, wherein the locking pawl (6) is urged into engagement with the teeth of the ratchet (7) on the fixed mounting (4) by resilient means.

7. A brake mechanism (1) according to any preceding claim, wherein the actuating pawl (10) is urged into engagement with the teeth of the ratchet (9) on the fixed mounting plate (8) by resilient means (14).

8. A brake mechanism (1) according to claim 6 and claim 7, wherein the resilient means is common to and acts between the locking pawl (6) and the actuating pawl (10).

9. A brake mechanism (1) according to any preceding claim, wherein the torsion spring (16) is earthed to the cable tensioning plate pivot (3).

10. A brake mechanism (1) according to any of claims 1 to 8, wherein the torsion spring (16) is earthed to the fixed mounting (4).

11. A brake mechanism (1) according to any preceding claim, wherein the torsion spring (16) is a clock spring.

12. A brake mechanism (1) according to any of claims 1 to 10, wherein the torsion spring (16) is a constant torque curved leaf spring.

## Patentansprüche

1. Kraftfahrzeug-Seilbremsvorrichtung (1), die einen Bremsenbetätigungshebel (2) aufweist, der verschwenkbar an einer befestigten Halterung (4) angebracht ist, eine Verriegelungssperrklinke (6) an dem Hebel (2), die in ein Zahngesperre (7) an der befestigten Halterung (4) eingreift, um den Hebel (2) lösbar in einer Betätigungsstellung zu verriegeln, eine Seilspannungsplatte (8), die verschwenkbar an der befestigten Halterung (4) angebracht ist und an der eine Verankerungseinrichtung (13) für ein Ende des Bremsseils (12) vorgesehen ist, eine Torsionsfeder (16), die zwischen der befestigten Halterung (4) und der Seilspannungsplatte (8) wirkt, um eine konstante Seilspannung aufrechtzuerhalten, weg sich der Hebel (2) in seiner Nicht-Betätigungs-Ruhestellung befindet, eine Betätigungssperrklinke (10), die von dem Hebel (2) getragen ist und in ein Zahngesperre (9) eingreift, das auf der Seilspannungsplatte (8) gebildet ist, um die Spannungsplatte (8) bei einer Hebelbewegung zu verdrehen und eine Seilspannung zu liefern, die für ein Bremsen ausreicht, **gekennzeichnet** durch eine Einrichtung zum Lösen der Betätigungssperrklinke (10) von dem Zahngesperre (9) auf der Seilspannungsplatte (8), wenn sich der Hebel (2) in seiner Nicht-Betätigungs-Ruhestellung befindet.

2. Bremsvorrichtung (1) nach Anspruch 1, dadurch **gekennzeichnet,** daß die Einrichtung zum Lösen der Betätigungssperrklinke (10) von dem Zahngesperre (9) auf der Spannungsplatte (8) einen von der befestigten Platte (4) vorragenden Mitnehmer (17) aufweist, der an der Betätigungssperrklinke (10) anstößt, wenn sich der Hebel (2) in der Nicht-Betätigungs-Ruhestellung befindet.

3. Bremsvorrichtung (1) nach Anspruch 1 oder 2, **gekennzeichnet** durch eine abbrechbare Einrichtung (20), die die Seilspannungsplatte (8) zeitweilig gegen eine Schwenkbewegung für die Zeitdauer von der anfänglichen Installation bis zur ersten Betätigungsbewegung des Hebels (2) verriegelt.

4. Bremsvorrichtung (1) nach einem der vorhergehenden Ansprüche, dadurch **gekennzeichnet,** daß der Betätigungshebel (2) und die Seilspannungsplatte (8) einen gemeinsamen Drehpunkt (3) haben.

5. Bremsvorrichtung (1) nach einem der vorhergehenden Ansprüche, dadurch **gekennzeichnet,** daß die Verriegelungssperrklinke (6) und die Betätigungssperrklinke (10) einen gemeinsamen Drehpunkt (11) haben.

6. Bremsvorrichtung (1) nach einem der vorhergehenden Ansprüche, dadurch **gekennzeichnet,** daß die Verriegelungssperrklinke (6) durch eine elastische Einrichtung in Eingriff mit den Zähnen des Zahngesperres (7) auf der befestigten Halterung (4) gedrückt wird.

7. Bremsvorrichtung (1) nach einem der vorhergehenden Ansprüche, dadurch **gekennzeichnet,** daß die Betätigungssperrklinke (10) durch eine elastische Einrichtung (14) in Eingriff mit den Zähnen des Zahngesperres (9) auf der befestigten Halterungsplatte (8) gedrückt wird.

8. Bremsvorrichtung (1) nach Anspruch 6 und 7, dadurch **gekennzeichnet,** daß die elastische Einrichtung der Verriegelungssperrklinke (6) und der Betätigungssperrklinke (10) gemeinsam ist und zwischen diesen wirkt.

9. Bremsvorrichtung (1) nach einem der vorhergehenden Ansprüche, dadurch **gekennzeichnet**, daß die Torsionsfeder (16) mit dem Drehpunkt (3) der Seilspannungsplatte verbunden ist.

10. Bremsvorrichtung (1) nach einem der Ansprüche 1 bis 8, dadurch **gekennzeichnet**, daß die Torsionsfeder (16) mit der befestigten Halterung (4) verbunden ist.

11. Bremsvorrichtung (1) nach einem der vorhergehenden Ansprüche, dadurch **gekennzeichnet**, daß die Torsionsfeder (16) eine Spiralfeder ist.

12. Bremsvorrichtung (1) nach einem der Ansprüche 1 bis 10, dadurch **gekennzeichnet,** daß die Torsionsfeder (16) eine gebogene Blattfeder mit konstanter Drehkraft ist.

## Revendications

1. Dispositif de frein à câble (1) pour un véhicule automobile, comprenant un levier de commande de frein (2) monté, pivotant, sur un montage fixe (4), un cliquet de verrouillage (6) sur le levier (2) coopérant avec des rochets (7) sur le montage fixe (4) pour verrouiller de façon amovible le levier (2) dans une position de commande, une plaque de tension de câble (8) montée, pivotante, sur le montage fixe (4) et ayant un moyen de fixation (13) pour une extrémité du câble de frein (12), un ressort de torsion (16) agissant entre le montage fixe (4) et la plaque de tension de câble (8) pour maintenir une tension de câble constante lorsque le levier (2) est dans sa position de repos de non-commande, un cliquet de commande (10) porté par le levier (2) et pouvant coopérer avec un secteur à rochets (9) formé sur la plaque de tension de câble (8) pour faire pivoter la plaque de tension (8) lors d'un mouvement du levier et pour procurer une tension de câble suffisante pour le freinage, caractérisé par des moyens pour dégager le cliquet de commande (10) du secteur à rochets (9) sur la plaque de tension de câble (8) lorsque le levier (2) est dans sa position de repos de non-commande.

2. Dispositif de frein (1) selon la revendication 1, dans lequel les moyens pour dégager le cliquet de commande (10) du secteur à rochets (9) sur la plaque de tension (8) comportent une came (17) dépassant de la plaque fixe (4) et venant en butée contre le cliquet de commande (10) lorsque le levier (2) est dans sa position de repos de non-commande.

3. Dispositif de frein (1) selon la revendication 1 ou la revendication 2, comprenant en outre des moyens cassables (20) pour verrouiller temporairement la plaque de tension de câble (8) et l'empêcher de pivoter pendant la période allant de l'installation initiale jusqu'au premier mouvement de commande du levier (2).

4. Dispositif de frein (1) selon l'une des revendications précédentes, dans lequel le levier de commande (2) et la plaque de tension de câble (8) ont un pivot commun (3).

5. Dispositif de frein (1) selon l'une des revendications précédentes, dans lequel le cliquet de verrouillage (6) et le cliquet de commande (10) ont un pivot commun (11).

6. Dispositif de frein (1) selon l'une des revendications précédentes, dans lequel le cliquet de verrouillage (6) est rappelé en prise avec les dents des rochets (7) sur le montage fixe (4) par des moyens élastiques.

7. Dispositif de frein (1) selon l'une des revendications précédentes, dans lequel le cliquet de commande (10) est rappelé en prise avec les dents des rochets (9) sur la plaque de montage fixe (8) par des moyens élastiques (14).

8. Dispositif de frein (1) selon la revendication 6 et la revendication 7, dans lequel les moyens élastiques sont communs au cliquet de verrouillage (6) et au cliquet de commande (10) et agissent entre les deux cliquets.

9. Dispositif de frein (1) selon l'une des revendications précédentes, dans lequel le ressort de torsion (16) est ancré sur le pivot de la plaque de tension de câble (3).

10. Dispositif de frein selon l'une des revendications 1 à 8, dans lequel le ressort de torsion (16) est ancré sur le montage fixe (4).

11. Dispositif de frein (1) selon l'une des revendications précédentes, dans lequel le ressort de torsion (16) est un ressort spiral.

12. Dispositif de frein (1) selon l'une des revendications 1 à 10, dans lequel le ressort de torsion (16) est un ressort à lame incurvée à couple constant.
